# EUROPÄISCHE PATENTANMELDUNG

(11) **EP 3 723 062 A1**
(43) Veröffentlichungstag der Anmeldung: **14.10.2020**
(21) Anmeldenummer: 19168146.9
(22) Anmeldetag: 09.04.2019
(51) Int. Cl.: G08G 1/01, G08G 1/07, G06N 3/08, G08G 1/017

(54) **VERFAHREN UND VORRICHTUNG ZUR COMPUTER-IMPLEMENTIERTEN VERKEHRSLEITUNG VON KRAFTFAHRZEUGEN IN EINEM VORBESTIMMTEN GEBIET**

(71) Anmelder: Siemens Aktiengesellschaft, 80333 München (DE)
(72) Erfinder: Gavranovic, Stefan, 85640 Putzbrunn (DE); Glas, Sylvia, 81739 München (DE); Heinrich, Veronika, 80339 München (DE); Held, Harald, 85461 Bockhorn (DE); Zeller, Christine, 80639 München (DE)

(57) **Zusammenfassung**

Die Erfindung betrifft ein Verfahren und eine Vorrichtung zur computer-implementierten Verkehrsleitung von Kraftfahrzeugen (K) in einem vorbestimmten Gebiet (G), bei dem in vorgegebenen Zeitabständen jeweils:
- Werte von Verkehrsparametern (VP) im vorbestimmten Gebiet (G) unter Verwendung einer Datenerfassung ermittelt werden, wobei zumindest ein Teil der Verkehrsparameter (VP) die im vorbestimmten Gebiet (G) fahrenden Kraftfahrzeuge (K) betrifft und die Verkehrsparameter (VP) eines jeweiligen Kraftfahrzeugs (K) dessen aktuelle Position (PO), Fahrtrichtung (FR) und Geschwindigkeit (GE) umfassen;
- mittels einer Optimierung (OPT) ein Satz (OS) von optimierten Verkehrsleitaktionen (OVL), welche die Einstellung von variierbaren Verkehrssignalgebern (AM, SC) umfassen, unter Verwendung eines gelernten datengetriebenen Modells (NN) bestimmt wird und die optimierten Verkehrsleitaktionen (OVL) ausgeführt werden, wobei die Optimierung prognostizierte Luftqualitätswerte (LQ) berücksichtigt und das datengetriebene Modell (NN) mittels Trainingsdaten (TD) aus einer Simulation (SI) gelernt ist.

## Beschreibung

Die Erfindung betrifft ein Verfahren und eine Vorrichtung zur computer-implementierten Verkehrsleitung von Kraftfahrzeugen in einem vorbestimmten Gebiet.

Insbesondere in Großstädten sind Belastungen der Bevölkerung durch verkehrsbedingten Ausstoß von Schadstoffen, wie Stickoxiden und Feinstaub, ein zunehmendes Problem. Demzufolge werden immer häufiger Fahrverbote für Kraftfahrzeuge und insbesondere bestimmte Fahrzeugtypen in Innenstädten verhängt. Solche Fahrverbote können jedoch zu unerwünschten Verkehrsproblemen auf Ausweichstrecken führen. Ferner wird die Schadstoffbelastung auf den Ausweichstrecken erhöht.

Zur Verminderung von Schadstoffemissionen in Ballungsgebieten gibt es die Möglichkeit, vermehrt emissionsfreie Fahrzeuge in der Form von Elektrofahrzeugen einzusetzen bzw. den Schadstoffausstoß von Kraftfahrzeugen, z.B. über die Verwendung von Filtern, zu reduzieren. Diese Maßnahmen sind jedoch nur langfristig realisierbar und erfordern die Nachrüstung bereits zugelassener Fahrzeuge.

In der Druckschrift [1] werden Simulationen beschrieben, mit denen die Luftverschmutzung in städtischen Gebieten basierend auf einer agentenbasierten Verkehrsmodellierung ermittelt werden kann. Es können dabei die Auswirkungen verschiedener Szenarien, wie Verhaltensweisen von Verkehrsteilnehmern oder Veränderungen in der Fahrzeugtechnologie, auf die Luftqualität analysiert werden. Diese Simulationen sind sehr rechenaufwändig und können nicht im Rahmen einer Verkehrsleitung eingesetzt werden, mit welcher der Verkehr in Großstädten durch entsprechende Verkehrsleitaktionen in Echtzeit angepasst wird.

Aufgabe der Erfindung ist es deshalb, ein Verfahren und eine Vorrichtung zur computer-implementierten Verkehrsleitung von Kraftfahrzeugen in einem vorbestimmten Gebiet zu schaffen, welche die Anpassung des Verkehrs zur Erreichung einer verbesserten Luftqualität ermöglichen.

Diese Aufgabe wird durch das Verfahren gemäß Patentanspruch 1 bzw. die Vorrichtung gemäß Patentanspruch 12 gelöst. Weiterbildungen der Erfindung sind in den abhängigen Ansprüchen definiert.

Das erfindungsgemäße Verfahren dient zur computer-implementierten Verkehrsleitung von Kraftfahrzeugen in einem vorbestimmten Gebiet. In vorgegebenen Zeitabständen, welche nicht konstant sein müssen, werden jeweils die nachfolgend erläuterten Schritte durchgeführt.

Zunächst werden Werte von Verkehrsparametern im vorbestimmten Gebiet unter Verwendung einer Datenerfassung ermittelt, wobei zumindest ein Teil der Verkehrsparameter die im vorbestimmten Gebiet fahrenden Kraftfahrzeuge betrifft und die Verkehrsparameter eines jeweiligen Kraftfahrzeugs dessen aktuelle Position, Fahrtrichtung und Geschwindigkeit umfassen. Die Verkehrsparameter können auf unterschiedliche Weise ermittelt werden, wobei weiter unten verschiedene Varianten der Ermittlung dieser Verkehrsparameter erläutert werden.

In einem nächsten Schritt wird mittels einer Optimierung ein Satz von optimierten Verkehrsleitaktionen, welche die Einstellung von variierbaren Verkehrssignalgebern umfassen, unter Verwendung eines gelernten datengetriebenen Modells bestimmt. Diese optimierten Verkehrsleitaktionen werden dann ausgeführt.

Das gelernte datengetriebene Modell ist dazu eingerichtet, aus Eingangsgrößen in der Form von Werten der Verkehrsparameter Ausgangsgrößen in der Form von Luftqualitätswerten für eine Vielzahl von Stellen im vorbestimmten Gebiet zu ermitteln (d.h. zu simulieren). Ein Luftqualitätswert spiegelt dabei die Luftqualität an der entsprechenden Stelle wider. Je nach Definition können höhere Luftqualitätswerte für eine bessere Luftqualität oder für eine schlechtere Luftqualität stehen. Die Luftqualitätswerte können beispielsweise durch Schadstoffkonzentrationen, wie z.B. von Stickoxiden und Feinstaub, repräsentiert werden.

Das im erfindungsgemäßen Verfahren verwendete datengetriebene Modell ist mittels Trainingsdatensätzen aus einer Simulation gelernt. Ein jeweiliger Trainingsdatensatz umfasst dabei Werte der Verkehrsparameter und zugehörige, über die Simulation bestimmte Luftqualitätswerte. Als Simulation kann eine an sich bekannte Simulation genutzt werden, beispielsweise die im obigen Dokument [1] beschriebene Simulation. Da eine entsprechende Simulation sehr rechenaufwändig und somit nicht echtzeitfähig ist, wird sie nicht direkt im erfindungsgemäßen Verfahren zur Bestimmung von Luftqualitätswerten genutzt. Vielmehr werden mit der Simulation vorab Trainingsdatensätze generiert, mit denen dann ein datengetriebenes Modell gelernt wird. Das gelernte datengetriebene Modell ist dann echtzeitfähig und kann im Rahmen einer Verkehrsleitung genutzt werden.

Die im erfindungsgemäßen Verfahren verwendete Optimierung umfasst eine Prognose von Luftqualitätswerten, gemäß der ausgehend von den mittels Datenerfassung ermittelten Werten der Verkehrsparameter für unterschiedliche Sätze von Verkehrsleitaktionen, welche die Einstellung von variierbaren Verkehrssignalgebern umfassen, jeweils Werte der Verkehrsparameter prognostiziert werden. Eine solche Prognose ist an sich bekannt und kann beispielsweise auf einem Transportmodell beruhen, mit dem die Bewegung der Kraftfahrzeuge und hierdurch Verkehrsparameter vorhergesagt werden. In einer Ausgestaltung kann ein Satz der unterschiedlichen Sätze von Verkehrsleitaktionen auch einen Satz von sog. Nullaktionen umfassen, d.h. es werden keine Verkehrsleitaktionen durchgeführt. Für diesen Satz von Verkehrsleitaktionen entsprechen die prognostizierten Werte der Verkehrsparameter den aktuell ermittelten Werten der Verkehrsparameter.

Nach der Prognose der Werte der Verkehrsparameter werden aus diesen prognostizierten Werten mittels des gelernten datengetriebenen Modells prognostizierte Luftqualitätswerte für die Vielzahl von Stellen im vorbestimmten Gebiet ermittelt. Mittels der Optimierung wird dann aus den unterschiedlichen Sätzen von Verkehrsleitaktionen der Satz von optimierten Verkehrsleitaktionen basierend auf einer Anzahl von Optimierungszielen bestimmt, welche das Ziel einer möglichst hohen Gesamtluftqualität unter Berücksichtigung aller prognostizierter Luftqualitätswerte für die Vielzahl von Stellen und/oder das Ziel einer möglichst hohen Teilluftqualität unter Berücksichtigung eines Teils der prognostizierten Luftqualitätswerte für einen Teil der Vielzahl von Stellen umfasst. Die Optimierungsziele können z.B. durch eine zu minimierende bzw. maximierende Kostenfunktion repräsentiert werden. Im Falle von mehreren Optimierungszielen werden die einzelnen Ziele vorzugsweise durch eine gewichtete Summe in der Kostenfunktion berücksichtigt. Die Gewichtungsfaktoren können je nach Priorität der einzelnen Optimierungsziele unterschiedlich gewählt werden.

Das erfindungsgemäße Verfahren zeichnet sich dadurch aus, dass erstmalig eine Verkehrsleitung unter Berücksichtigung der Luftqualität in einem vorbestimmten Gebiet erreicht wird. Erfindungswesentlich ist dabei, dass hierzu ein gelerntes datengetriebenes Modell verwendet wird, welches die Echtzeitfähigkeit des Verfahrens im Unterschied zu der Verwendung von Simulationen gewährleistet.

Je nach Ausgestaltung des erfindungsgemäßen Verfahrens können verschiedene datengetriebene Modelle genutzt werden. Vorzugsweise ist das datengetriebene Modell eine neuronale Netzstruktur aus einem oder mehreren neuronalen Netzen. Nichtsdestotrotz kann das datengetriebene Modell ggf. auch auf Support Vector Machines beruhen.

Neben den oben genannten Optimierungszielen kann die Anzahl von Optimierungszielen ggf. auch das Ziel einer möglichst geringen Variation der prognostizierten Luftqualitätswerte über das vorbestimmte Gebiet hinweg umfassen. Dieses Ziel kann beispielsweise durch die Varianz der Häufigkeitsverteilung der prognostizierten Luftqualitätswerte repräsentiert werden. Je kleiner die Varianz ist, desto geringer ist die Variation der prognostizierten Luftqualitätswerte.

In einer besonders bevorzugten Ausführungsform enthalten die Verkehrsparameter ferner das Fahrzeugmodell der jeweiligen Kraftfahrzeuge und/oder Luftqualitätsmessungen an einer Anzahl von Messstellen im vorbestimmten Gebiet. Auf diese Weise wird die Prognose der Luftqualitätswerte verbessert.

In einer weiteren Variante des erfindungsgemäßen Verfahrens umfasst die oben genannte Datenerfassung die Erfassung der Position und/oder der Geschwindigkeit und/oder der Fahrtrichtung und/oder des Nummernschilds der jeweiligen Kraftfahrzeuge durch eine Vielzahl von Kameras. Durch Abgleich des Nummernschilds mit einer Datenbank, in der die Fahrzeugmodelle für zugelassene Kraftfahrzeuge hinterlegt sind, kann das Fahrzeugmodell eines jeweiligen Kraftfahrzeugs bestimmt werden.

In einer weiteren Ausführungsform des erfindungsgemäßen Verfahrens ist die Datenerfassung derart ausgestaltet, dass zumindest ein Teil der Verkehrsparameter durch die Kraftfahrzeuge drahtlos ausgesendet und von einer Vielzahl von Empfängern im vorbestimmten Gebiet empfangen wird. Hierdurch werden die Verkehrsparameter auf besonders einfache Weise ermittelt.

Die variierbaren Verkehrssignalgeber können unterschiedlich ausgestaltet sein. Vorzugsweise umfassen die variierbaren Verkehrssignalgeber Ampelanlagen und/oder Verkehrsschilder mit variablem Informationsinhalt.

In einer weiteren, besonders bevorzugten Ausführungsform umfassen die optimierten Verkehrsleitaktionen Aktionen, welche den öffentlichen Nahverkehr beeinflussen, insbesondere eine Veränderung der Taktrate einer oder mehrerer Linien im öffentlichen Nahverkehr (z.B. Bahn- und/oder Buslinien) und/oder eine Veränderung der Kapazität von Transportmitteln (z.B. Bussen und/oder Bahnen) im öffentlichen Nahverkehr. Hierdurch werden die Möglichkeiten zur Beeinflussung des Verkehrs erhöht.

In einer weiteren bevorzugten Ausgestaltung umfassen die optimierten Verkehrsleitaktionen Umleitanweisungen, die an zumindest einen Teil der Kraftfahrzeuge übertragen werden und im entsprechenden Kraftfahrzeug die Fahrtroute des Navigationssystems anpassen. Hierdurch wird eine weitere Möglichkeit zur Einflussnahme auf den Verkehr geschaffen.

In einer weiteren Ausgestaltung bewirken die optimierten Verkehrsleitaktionen, dass ein oder mehrere Straßenabschnitte im vorbestimmten Gebiet für zumindest einen Teil der Kraftfahrzeuge und insbesondere für Kraftfahrzeuge eines bestimmten Antriebstyps, wie z.B. Diesel-Fahrzeuge, gesperrt werden. Auf diese Weise können mit der erfindungsgemäßen Verkehrsleitung auch gesetzliche Vorschriften im Hinblick auf Fahrverbote berücksichtigt werden.

In einer weiteren Variante des erfindungsgemäßen Verfahrens wird die obige Simulation, die vorab zur Erzeugung von Trainingsdaten durchgeführt wird, basierend auf Verkehrsparametern fortgesetzt, die während der Durchführung des erfindungsgemäßen Verfahrens unter Verwendung der Datenerfassung ermittelt werden, wodurch neue Trainingsdatensätze erhalten werden, mit denen das Lernen des datengetriebenen Modells während der Durchführung des erfindungsgemäßen Verfahrens fortgesetzt wird. Auf diese Weise wird die Verkehrsleitung kontinuierlich durch Online-Lernen des datengetriebenen Modells verbessert.

Neben dem oben beschriebenen Verfahren betrifft die Erfindung eine Vorrichtung zur computer-implementierten Verkehrsleitung von Kraftfahrzeugen in einem vorbestimmten Gebiet, wobei die Vorrichtung zur Durchführung des erfindungsgemäßen Verfahrens bzw. einer oder mehrerer bevorzugter Varianten des erfindungsgemäßen Verfahrens eingerichtet ist.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Darüber hinaus umfasst die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

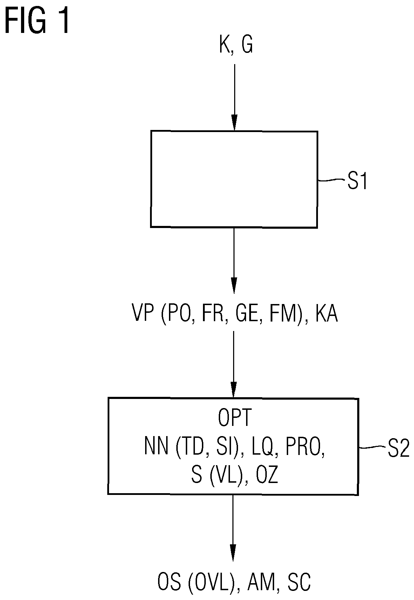

Ein Ausführungsbeispiel der Erfindung wird nachfolgend anhand der beigefügten Fig. 1 beschrieben. Diese Figur zeigt ein Flussdiagramm, das die in einer Variante der Erfindung durchgeführten Verfahrensschritte verdeutlicht.

Ausgangspunkt der hier beschriebenen Ausführungsform des erfindungsgemäßen Verfahrens ist ein vorbestimmtes Gebiet G, bei dem es sich beispielsweise um eine Stadt oder einen Stadtteil handelt. In diesem Gebiet fahren eine Vielzahl von Kraftfahrzeugen, welche in Fig. 1 allgemein mit dem Bezugszeichen K bezeichnet sind. Ziel ist es nunmehr, eine optimierte Verkehrsleitung der Kraftfahrzeuge K unter Berücksichtigung von Luftqualitätswerten im betrachteten Gebiet G zu erreichen. Hierzu wird das nachfolgend beschriebene Verfahren genutzt, bei dem unter Verwendung eines Computers optimierte Verkehrsleitaktionen ermittelt werden. Der Computer ist vorzugsweise in einer Verkehrsleitwarte integriert. Die ermittelten optimierten Verkehrsleitaktionen werden über die Verkehrsleitwarte an geeignete variierbare Verkehrssignalgeber gegeben, basierend auf denen die Kraftfahrzeuge dann so gelenkt werden, dass eine Verkehrsleitung unter Berücksichtigung einer möglichst guten Luftqualität erfolgt.

Gemäß Schritt S1 des Verfahrens der Fig. 1 werden Werte von Verkehrsparametern VP im vorbestimmten Gebiet G unter Verwendung einer Datenerfassung ermittelt. Zumindest ein Teil der Verkehrsparameter steht dabei im Zusammenhang mit den im vorbestimmten Gebiet fahrenden Kraftfahrzeuge K. Die Verkehrsparameter eines jeweiligen Kraftfahrzeugs umfassen dessen aktuelle Position PO, dessen Fahrtrichtung FR, dessen Geschwindigkeit GE sowie auch das Fahrzeugmodell FM des Kraftfahrzeugs, d.h. das genaue Fabrikat und den genauen Fahrzeugtyp von diesem Fabrikat. Die Position PO, die Fahrtrichtung FR und die Geschwindigkeit GE werden in der hier beschriebenen Ausführungsform über Kameras KA ermittelt, die an den Straßen des vorbestimmten Gebiets installiert sind.

Gegebenenfalls kann über eine geeignete Objekterkennung direkt aus den Sensordaten der Kameras auch das Fahrzeugmodell FM des Kraftfahrzeugs abgeleitet werden. In einer bevorzugten Variante wird das Fahrzeugmodell jedoch indirekt über eine Nummernschilderkennung bestimmt. Dabei werden aus den mittels der Kameras erfassten Bildern die Nummernschilder der entsprechenden Kraftfahrzeuge durch Objekterkennung extrahiert. Durch Abgleich mit einer Datenbank, die für jedes zugelassene Kraftfahrzeug dessen Fahrzeugmodell enthält, kann dann über das Nummernschild das entsprechende Fahrzeugmodell ausgelesen werden. Da die Schadstoffemissionen eines Kraftfahrzeugs vom Fahrzeugmodell abhängen, spiegeln diese Verkehrsparameter die Schadstoffemissionen gut wider.

Die im Schritt S1 zu einem bestimmten Zeitpunkt bestimmten Verkehrsparameter VP werden in einem nachfolgenden Schritt S2 für eine Optimierung OPT verwendet. Diese Optimierung nutzt ein datengetriebenes Modell in der Form eines gelernten neuronalen Netzes NN. Dieses neuronale Netz ist basierend auf Trainingsdaten TD gelernt, die wiederum aus einer Simulation SI gewonnen sind. Als Simulation wird dabei eine an sich bekannte Simulation genutzt, beispielsweise die in der Druckschrift [1] beschriebene Simulation.

Das neuronale Netz NN ist dazu eingerichtet, Luftqualitätswerte LQ für eine Vielzahl von Stellen in dem gesamten betrachteten Gebiet G basierend auf aktuellen oder prognostizierten Werten der Verkehrsparameter VP zu simulieren. In der hier beschriebenen Ausführungsform werden die Luftqualitätswerte durch Schadstoffkonzentrationen von Stickoxiden und/oder Feinstaub repräsentiert. In diesem Fall wird mit zunehmendem Luftqualitätswert die Luftqualität geringer. Der Luftqualitätswert kann jedoch auch auf andere Weise definiert werden und beispielsweise den Kehrwert der genannten Konzentrationen darstellen. In diesem Fall repräsentieren größere Luftqualitätswerte bessere Luftqualitäten im betrachteten Gebiet G.

Da die Simulation SI zeitaufwändig ist, wird sie nicht direkt im Verfahren der Fig. 1 durchgeführt, denn die Ergebnisse dieses Verfahrens müssen im Wesentlichen in Echtzeit bestimmt werden. Stattdessen wird die Simulation SI vorab zur Generierung der Trainingsdaten TD genutzt, mit denen dann das neuronale Netz NN ebenfalls vorab gelernt wird. Mit anderen Worten wird die Simulation SI vorab für eine Vielzahl von unterschiedlichen Werten von Verkehrsparametern durchgeführt und gibt dabei jeweils Luftqualitätswerte aus. Die Werte der Verkehrsparameter mit den ausgegebenen Luftqualitätswerten stellen einen geeigneten Trainingsdatensatz dar. Es wird dabei eine Vielzahl von Trainingsdatensätzen generiert, die anschließend in an sich bekannter Weise zum Lernen des neuronalen Netzes NN verwendet werden.

Mittels des gelernten neuronalen Netzes NN erhält man im Verfahren der Fig. 1 aus prognostizierten Werten von Verkehrsparametern VP die entsprechenden Luftqualitätswerte LQ im betrachteten Gebiet G. Die prognostizierten Werte der Verkehrsparameter stammen dabei aus einer Prognose PRO, gemäß der für viele verschiedene Sätze S von Verkehrsleitaktionen VL, welche die Einstellung von variierbaren Verkehrssignalgebern umfassen, jeweils Werte der Verkehrsparameter VP ausgehend von den aktuellen, in Schritt S1 ermittelten Werten der Verkehrsparameter prognostiziert werden. Entsprechende Prognoseverfahren sind dem Fachmann bekannt und werden deshalb nicht im Detail erläutert. In dem hier beschriebenen Ausführungsbeispiel umfassen die Sätze S von Verkehrsleitaktionen VL auch einen Satz von sog. Nullaktionen, d.h. es werden keine Verkehrsleitaktionen durchgeführt, so dass die prognostizierten Werte der Verkehrsparameter den in Schritt S1 gewonnenen Werten zum aktuellen Zeitpunkt entsprechen. Aus den prognostizierten Werten der Verkehrsparameter, die zu unterschiedlichen Sätzen von Verkehrsteilaktionen gehören, werden dann mittels des neuronalen Netzes NN prognostizierte Luftqualitätswerte LQ für die Vielzahl von Stellen im gesamten Gebiet G ermittelt und in diesem Sinne prognostiziert.

Anschließend wird aus den Sätzen S von Verkehrsleitaktionen VL mittels Optimierungszielen OZ derjenige optimierte Satz OS von optimierten Verkehrsleitaktionen OVL ermittelt, der den Optimierungszielen am nächsten kommt. In der hier beschriebenen Ausführungsform umfassen die Optimierungsziele zum einen das Ziel einer möglichst hohen Gesamtluftqualität im gesamten Gebiet G und das Ziel einer möglichst geringen Variation der Luftqualitätswerte im gesamten Gebiet. Diese Ziele können durch eine geeignet definierte Kostenfunktion berücksichtigt werden. Die einzelnen Ziele gehen in die Kostenfunktion mit entsprechenden Gewichten ein, wobei je nach Ausgestaltung die Gewichte in Abhängigkeit von der Priorisierung der Ziele unterschiedlich gewählt werden können.

In der hier beschriebenen Ausführungsform umfassen die Verkehrsleitaktionen VL und damit auch die optimierten Verkehrsleitaktionen OVL die Einstellung von variierbaren Signalgebern in der Form von Ampelanlagen AM sowie Verkehrsschildern SC mit variablem Inhalt. Über diese Verkehrsschilder können z.B. Umleitungen bewirkt werden. Ebenso kann die zulässige Höchstgeschwindigkeit durch Anpassung des Inhalts eines entsprechenden Verkehrsschilds angepasst werden.

Ausgelöst durch Befehle in der Verkehrsleitwarte wird schließlich der optimierte Satz OS von Verkehrsleitaktionen OVL ausgeführt, d.h. die variierbaren Verkehrssignalgeber werden gemäß den optimierten Verkehrsleitaktionen OVL angepasst. Dabei kann unter Umständen der Fall auftreten, dass gemäß der Optimierung als optimierter Satz von Verkehrsleitaktionen die oben genannten Nullaktionen ermittelt werden. In diesem Fall wird an den bestehenden variierbaren Verkehrssignalgebern nichts geändert.

In einer optionalen Ausgestaltung des oben beschriebenen Verfahrens können die Verkehrsleitaktionen auch Aktionen umfassen, die den öffentlichen Nahverkehr im betrachteten Gebiet betreffen, beispielsweise eine Anpassung der Taktrate von Linien im öffentlichen Nahverkehr oder eine Anpassung der Kapazität von Transportmitteln im öffentlichen Nahverkehr. Darüber hinaus können die oben beschriebenen Werte der Verkehrsparameter auch noch weitere Werte umfassen, z.B. reale Schadstoffmessungen im betrachteten Gebiet.

Ebenso müssen die Werte der Verkehrsparameter nicht zwangsläufig durch eine Kamera erfasst werden. Vielmehr besteht auch die Möglichkeit, dass die einzelnen Kraftfahrzeuge die entsprechenden Verkehrsparameter an Empfänger am Straßenrand übertragen, wobei diese empfangenen Werte dann an die Verkehrsleitwarte übermittelt werden. Darüber hinaus können die Verkehrsleitaktionen ggf. auch Umleitanweisungen umfassen, die über entsprechende Sender am Straßenrand an bestimmte Kraftfahrzeuge übertragen werden, so dass eine Fahrtroute in diesen Kraftfahrzeugen entsprechend geändert wird und der Fahrer dann eine andere Route fährt.

Darüber hinaus können die oben beschriebenen Ziele der Optimierung auch andere bzw. weitere Optimierungsziele umfassen. Zum Beispiel kann ein Optimierungsziel darin bestehen, dass eine möglichst hohe Luftqualität nur für bestimmte Bereiche in dem vorbestimmten Gebiet erreicht werden soll. Darüber hinaus muss als gelerntes datengetriebenes Modell nicht zwangsläufig ein neuronales Netz verwendet werden. Vielmehr können auch andere datengetriebene Modelle, wie z.B. Support Vector Machines, zum Einsatz kommen. Entscheidend ist lediglich, dass die datengetriebenen Modelle in geeigneter Weise über maschinelle Lernverfahren basierend auf den oben beschriebenen Trainingsdaten gelernt werden können.

Die im Vorangegangenen beschriebene Ausführungsform der Erfindung weist eine Reihe von Vorteilen auf. Insbesondere wird ein Verfahren zur intelligenten Verkehrsleitung geschaffen, das die Luftqualität bei einer Echtzeit-Entscheidungsfindung zur Festlegung von Verkehrsleitaktionen berücksichtigt. Dabei wird ein maschinell gelerntes datengetriebenes Modell verwendet, dessen Trainingsdaten aus Simulationen stammen. Durch die Verwendung des datengetriebenen Modells wird die Echtzeitfähigkeit des Verfahrens sichergestellt. Durch die Prognose von Luftqualitätswerten, die über das datengetriebene Modell erhalten werden, können geeignete Verkehrsleitaktionen unter Berücksichtigung einer ausreichenden Luftqualität bestimmt werden.

### Literaturverzeichnis

[1] F. Hülsmann: Dissertation "Integrated agent-based transport simulation and air pollution modelling in urban areas - the example of Munich", 6. Mai 2014, TU München

## Patentansprüche

1. Verfahren zur computer-implementierten Verkehrsleitung von Kraftfahrzeugen (K) in einem vorbestimmten Gebiet (G), bei dem in vorgegebenen Zeitabständen jeweils:
- Werte von Verkehrsparametern (VP) im vorbestimmten Gebiet (G) unter Verwendung einer Datenerfassung ermittelt werden, wobei zumindest ein Teil der Verkehrsparameter (VP) die im vorbestimmten Gebiet (G) fahrenden Kraftfahrzeuge (K) betrifft und die Verkehrsparameter (VP) eines jeweiligen Kraftfahrzeugs (K) dessen aktuelle Position (PO), Fahrtrichtung (FR) und Geschwindigkeit (GE) umfassen;
- mittels einer Optimierung (OPT) ein Satz (OS) von optimierten Verkehrsleitaktionen (OVL), welche die Einstellung von variierbaren Verkehrssignalgebern (AM, SC) umfassen, unter Verwendung eines gelernten datengetriebenen Modells (NN) bestimmt wird und die optimierten Verkehrsleitaktionen (OVL) ausgeführt werden;
- wobei das gelernte datengetriebene Modell (NN) dazu eingerichtet ist, aus Eingangsgrößen in der Form von Werten der Verkehrsparameter (VP) Ausgangsgrößen in der Form von Luftqualitätswerten (LQ) für eine Vielzahl von Stellen im vorbestimmten Gebiet (G) zu ermitteln, und wobei das datengetriebene Modell (NN) mittels Trainingsdatensätzen (TD) aus einer Simulation (SI) gelernt ist, wobei ein jeweiliger Trainingsdatensatz (TD) Werte der Verkehrsparameter (VP) und zugehörige, über die Simulation (SI) bestimmte Luftqualitätswerte (LQ) umfasst;
- wobei die Optimierung (OPT) eine Prognose (PRO) von Luftqualitätswerten (LQ) umfasst, gemäß der ausgehend von den ermittelten Werten der Verkehrsparameter (VP) für unterschiedliche Sätze (S) von Verkehrsleitaktionen (VL) jeweils Werte der Verkehrsparameter (VP) prognostiziert werden, aus denen mittels des gelernten datengetriebenen Modells (NN) prognostizierte Luftqualitätswerte (LQ) für die Vielzahl von Stellen ermittelt werden, und wobei mittels der Optimierung (OPT) aus den unterschiedlichen Sätzen (S) von Verkehrsleitaktionen (VL) der Satz (OS) von optimierten Verkehrsleitaktionen (OVL) basierend auf einer Anzahl von Optimierungszielen (OZ) bestimmt wird, welche das Ziel einer möglichst hohen Gesamtluftqualität unter Berücksichtigung aller prognostizierter Luftqualitätswerte (LQ) für die Vielzahl von Stellen (G) und/oder das Ziel einer möglichst hohen Teilluftqualität unter Berücksichtigung eines Teils der prognostizierten Luftqualitätswerte (LQ) für einen Teil der Vielzahl von Stellen umfasst.

2. Verfahren nach Anspruch 1, wobei das datengetriebene Modell (NN) eine neuronale Netzstruktur aus einem oder mehreren neuronalen Netzen ist.

3. Verfahren nach Anspruch 1 oder 2, wobei die Anzahl von Optimierungszielen (OZ) ferner das Ziel einer möglichst geringen Variation der prognostizierten Luftqualitätswerte (LQ) über das vorbestimmte Gebiet (G) hinweg umfasst.

4. Verfahren nach einem der vorhergehenden Ansprüche, wobei die Verkehrsparameter (VP) ferner das Fahrzeugmodell (FM) der jeweiligen Kraftfahrzeuge (K) und/oder Luftqualitätsmessungen an einer Anzahl von Messstellen im vorbestimmten Gebiet (GE) enthalten.

5. Verfahren nach einem der vorhergehenden Ansprüche, wobei die Datenerfassung die Erfassung der Position (PO) und/oder der Geschwindigkeit (GE) und/oder der Fahrtrichtung (FR) und/oder des Nummernschilds der jeweiligen Kraftfahrzeuge (K) durch eine Vielzahl von Kameras (KA) umfasst.

6. Verfahren nach einem der vorhergehenden Ansprüche, wobei die Datenerfassung derart ausgestaltet ist, dass zumindest ein Teil der Verkehrsparameter (VP) durch die Kraftfahrzeuge (K) drahtlos ausgesendet und von einer Vielzahl von Empfängern im vorbestimmten Gebiet (G) empfangen wird.

7. Verfahren nach einem der vorhergehenden Ansprüche, wobei die variierbaren Verkehrssignalgeber (AM, SC) Ampelanlagen (AM) und/der Verkehrsschilder (SC) mit variablem Informationsinhalt umfassen.

8. Verfahren nach einem der vorhergehenden Ansprüche, wobei die optimierten Verkehrsleitaktionen (OVL) Aktionen umfassen, welche den öffentlichen Nahverkehr beeinflussen, insbesondere eine Veränderung der Taktrate einer oder mehrerer Linien des öffentlichen Nahverkehrs und/oder eine Veränderung der Kapazität von Transportmitteln im öffentlichen Nahverkehr.

9. Verfahren nach einem der vorhergehenden Ansprüche, wobei die optimierten Verkehrsleitaktionen (OVL) Umleitanweisungen umfassen, die an zumindest einen Teil der Kraftfahrzeuge (K) übertragen werden und im entsprechenden Kraftfahrzeug (K) die Fahrtroute des Navigationssystems anpassen.

10. Verfahren nach einem der vorhergehenden Ansprüche, wobei die optimierten Verkehrsleitaktionen (OVL) bewirken, dass ein oder mehrere Straßenabschnitte im vorstimmten Gebiet (G) für zumindest einen Teil der Kraftfahrzeuge (K) und insbesondere für Kraftfahrzeuge (K) eines bestimmten Antriebstyps gesperrt werden.

11. Verfahren nach einem der vorhergehenden Ansprüche, wobei die Simulation (SI) basierend auf Verkehrsparametern (VP) fortgesetzt wird, die während des Verfahrens unter Verwendung der Datenerfassung ermittelt werden, wodurch neue Trainingsdatensätze (TD) erhalten werden, mit denen das Lernen des datengetriebenen Modells (NN) während des Verfahrens fortgesetzt wird.

12. Vorrichtung zur computer-implementierten Verkehrsleitung von Kraftfahrzeugen (K) in einem vorbestimmten Gebiet (G), wobei die Vorrichtung zur Durchführung eines Verfahrens eingerichtet ist, bei dem in vorgegebenen Zeitabständen jeweils:
- Werte von Verkehrsparametern (VP) im vorbestimmten Gebiet (G) unter Verwendung einer Datenerfassung ermittelt werden, wobei zumindest ein Teil der Verkehrsparameter (VP) die im vorbestimmten Gebiet (G) fahrenden Kraftfahrzeuge (K) betrifft und die Verkehrsparameter (VP) eines jeweiligen Kraftfahrzeugs (K) dessen aktuelle Position (PO), Fahrtrichtung (FR) und Geschwindigkeit (GE) umfassen;
- mittels einer Optimierung (OPT) ein Satz (OS) von optimierten Verkehrsleitaktionen (OVL), welche die Einstellung von variierbaren Verkehrssignalgebern (AM, SC) umfassen, unter Verwendung eines gelernten datengetriebenen Modells (NN) bestimmt wird und die optimierten Verkehrsleitaktionen (OVL) ausgeführt werden;
- wobei das gelernte datengetriebene Modell (NN) dazu eingerichtet ist, aus Eingangsgrößen in der Form von Werten der Verkehrsparameter (VP) Ausgangsgrößen in der Form von Luftqualitätswerten (LQ) für eine Vielzahl von Stellen im vorbestimmten Gebiet (G) zu ermitteln, und wobei das datengetriebene Modell (NN) mittels Trainingsdatensätzen (TD) aus einer Simulation (SI) gelernt ist, wobei ein jeweiliger Trainingsdatensatz (TD) Werte der Verkehrsparameter (VP) und zugehörige, über die Simulation (SI) bestimmte Luftqualitätswerte (LQ) umfasst;
- wobei die Optimierung (OPT) eine Prognose (PRO) von Luftqualitätswerten (LQ) umfasst, gemäß der ausgehend von den ermittelten Werten der Verkehrsparameter (VP) für unterschiedliche Sätze (S) von Verkehrsleitaktionen (VL) jeweils Werte der Verkehrsparameter (VP) prognostiziert werden, aus denen mittels des gelernten datengetriebenen Modells (NN) prognostizierte Luftqualitätswerte (LQ) für die Vielzahl von Stellen ermittelt werden, und wobei mittels der Optimierung (OPT) aus den unterschiedlichen Sätzen (S) von Verkehrsleitaktionen (VL) der Satz (OS) von optimierten Verkehrsleitaktionen (OVL) basierend auf einer Anzahl von Optimierungszielen (OZ) bestimmt wird, welche das Ziel einer möglichst hohen Gesamtluftqualität unter Berücksichtigung aller prognostizierter Luftqualitätswerte (LQ) für die Vielzahl von Stellen (G) und/oder das Ziel einer möglichst hohen Teilluftqualität unter Berücksichtigung eines Teils der prognostizierten Luftqualitätswerte (LQ) für einen Teil der Vielzahl von Stellen umfasst.

13. Vorrichtung nach Anspruch 12, wobei die Vorrichtung zur Durchführung eines Verfahrens nach einem der Ansprüche 2 bis 11 eingerichtet ist.

14. Computerprogrammprodukt mit einem auf einem maschinenlesbaren Träger gespeicherten Programmcode zur Durchführung eines Verfahrens nach einem der Ansprüche 1 bis 11, wenn der Programmcode auf einem Computer ausgeführt wird.

15. Computerprogramm mit einem Programmcode zur Durchführung eines Verfahrens nach einem der Ansprüche 1 bis 11, wenn der Programmcode auf einem Computer ausgeführt wird.
